# EUROPEAN PATENT SPECIFICATION

(11) **EP 3 851 219 B1**
(45) Date of publication and mention of the grant of the patent: **12.03.2025**
(21) Application number: 19859257.8
(22) Date of filing: 06.08.2019
(51) Int. Cl.: B21D 3/02, G06T 7/246, G06T 7/70

(54) **METHOD FOR CONTROLLING STEEL REINFORCEMENT STRAIGHTENING EQUIPMENT AND APPARATUS THEREFOR**
VERFAHREN ZUR STEUERUNG EINER STAHLVERSTÄRKUNGSRICHTANLAGE UND VORRICHTUNG DAFÜR
PROCÉDÉ DE COMMANDE D'ÉQUIPEMENT DE REDRESSEMENT DE RENFORT EN ACIER ET APPAREIL ASSOCIÉ

(30) Priority: 10.09.2018 KR 20180107893
(43) Date of publication of application: 21.07.2021
(73) Proprietor: ROBOCON Technologies Corp., Busan (KR)
(72) Inventor: BAN, Chang Wan, Seoul 05507 (KR); JO, Jun Ki, Changwon-si, Gyeongsangnam-do 51607 (KR)
(74) Representative: FRKelly
(86) International application number: PCT/KR2019/009816
(87) International publication number: WO 2020/054975

(56) References cited:
- JP-A- 2011 092 990
- JP-A- S59 156 515
- KR-A- 19980 068 600
- KR-A- 20060 018 180
- KR-B1- 101 139 596
- KR-B1- 101 379 438
- KR-B1- 101 645 581

## Description

### TECHNICAL FIELD

The present disclosure relates to a method of and apparatus for controlling a steel bar straightener, and more particularly, to a method of and apparatus for automatically controlling a steel bar straightener by automatically detecting bending of a steel bar discharged through the steel bar straightener.

### BACKGROUND ART

A steel bar straightener includes a plurality of rollers and may be largely divided into a roller pressure system and a rotary system according to a straightening system. Both systems control a pressure of the roller to straighten a steel bar, and according to the pressure applied to the roller, the steel bar coming out of the steel bar straightener may be bent. Therefore, in the related art, there is an inconvenience of manually controlling the pressure applied to the roller by manually checking, or with the naked eye, whether the steel bar coming out through an outlet of the steel bar straightener is bent. KR101645581 discloses a cutting machine to correct and bend coil rebar.

### DESCRIPTION OF EMBODIMENTS

### TECHNICAL PROBLEM

An object of the present disclosure is to provide a method and an apparatus capable of automatically controlling a pressure applied to each roller of a steel bar straightener by detecting bending of a steel bar through imaging of an image.

### SOLUTION TO PROBLEM

According to an embodiment of the present disclosure, there is provided a method of controlling a steel bar straightener, the method including: acquiring an image that is obtained by imaging an end point of a steel bar when the steel bar output through an outlet of the steel bar straightener arrives at a preset position; detecting a region of a control map that matches with an end point of the steel bar of an image when matching the image with the control map configured of a plurality of regions; and controlling the steel bar straightener based on a preset control value mapped in a region of the control map.

According to another embodiment of the present disclosure, there is provided an apparatus for controlling a steel bar straightener, the apparatus including: an imaging unit that acquires an image obtained by imaging a steel bar output through an outlet of a steel bar straightener; a region detecting unit that detects a region of a control map that matches with an end point of the steel bar of an image when matching the image with the control map configured of a plurality of regions; and a control unit that controls the steel bar straightener based on a preset control value mapped in a region of the control map.

### ADVANTAGEOUS EFFECTS OF DISCLOSURE

According to an embodiment of the present disclosure, it is possible to correct bending of the steel bar output from the steel bar straightener through automatic control. According to another embodiment, in a case where the steel bar straightener is capable of simultaneously straightening two or more steel bars, straightening control for two or more steel bars may be performed simultaneously.

### BRIEF DESCRIPTION OF DRAWINGS

FIG. 1 is a diagram illustrating a schematic configuration of an entire system for straightening a steel bar according to an embodiment of the present disclosure;
FIG. 2 is a view illustrating an example of a detailed configuration of a steel bar straightener according to an embodiment of the present disclosure;
FIG. 3 is a view illustrating an example in which a steel bar straightener outputs one steel bar according to an embodiment of the present disclosure;
FIG. 4 is a view illustrating an example in which a steel bar straightener simultaneously outputs two steel bars according to an embodiment of the present disclosure;
FIG. 5 is a diagram illustrating an example of an image capturing method according to an embodiment of the present disclosure;
FIG. 6 is a diagram illustrating an example of a captured image of an end point of a steel bar output from a steel bar straightener according to an embodiment of the present disclosure;
FIGS. 7 and 8 are diagrams illustrating examples of control maps according to the present disclosure;
FIG. 9 is a diagram illustrating an example in which a control map and an end point of a steel bar are matched according to an embodiment of the present disclosure;
FIG. 10 is a flowchart illustrating an example of a method of controlling a steel bar straightener according to the present disclosure; and
FIG. 11 is a diagram illustrating a configuration of a control apparatus according to the present disclosure.

### MODE OF DISCLOSURE

Hereinafter, a method of and apparatus for controlling a steel bar straightener according to the present disclosure will be described in detail with reference to the accompanying drawings.

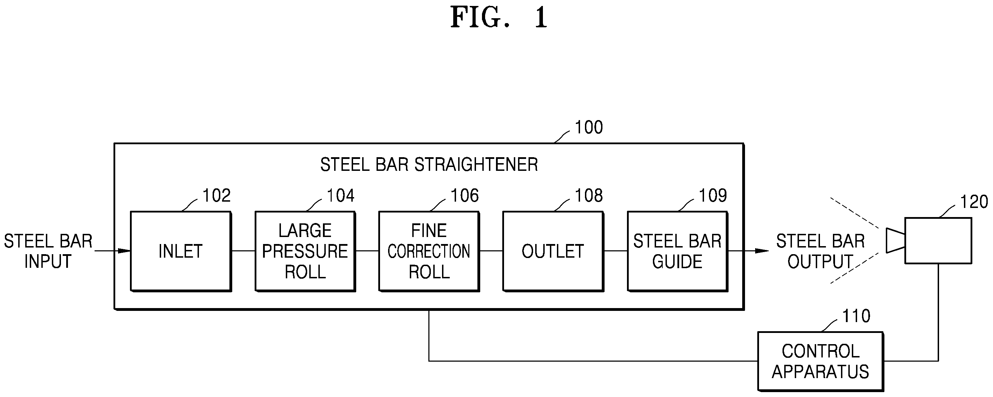

FIG. 1 is a diagram illustrating a schematic configuration of an entire system for straightening a steel bar according to an embodiment of the present disclosure.

Referring to FIG. 1, a steel bar straightener 100 largely includes an inlet 102 into which the steel bar is inserted, a large pressure roll 104 and a fine correction roll 106 that straighten the steel bar, and an outlet 108 through which the steel bar is discharged. The large pressure roll 104 and the fine correction roll 106 include a plurality of rollers and control a position and a pressure of each roller to straighten the steel bar. In some embodiments, a steel bar guide 109 may be or may not be further included in front of the outlet 108 to guide a discharging direction of the steel bar so that the steel bar may be directly discharged to the front. In the present embodiment, the steel bar straightener 100 is only an example for aiding understanding and the present disclosure is not necessarily limited thereto.

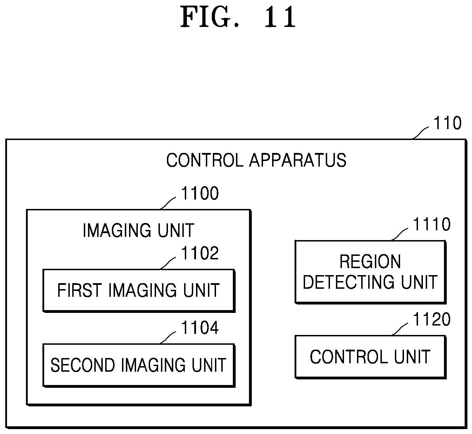

The control apparatus 110 images the steel bar output from the steel bar straightener 100 by using an image capturing apparatus 120, analyzes the captured image, automatically detects whether the steel bar is normally straightened or bent, and then automatically generates a control signal if the steel bar is bent to control the large pressure roll 104 or the fine correction roll 106 of the steel bar straightener 100. A configuration of an embodiment of the control apparatus 110 is illustrated in FIG. 11.

The image capturing apparatus 120 is an apparatus for capturing a moving image or a still image, and captures an image of an end point of the steel bar at a location spaced at a certain distance from the outlet 108 of the steel bar straightener 100. The image capturing apparatus 120 is preferably located in front of the outlet 108 so that the bending of the steel bar may be grasped, but it may be installed anywhere at a position where the bending of the steel bar may be grasped.

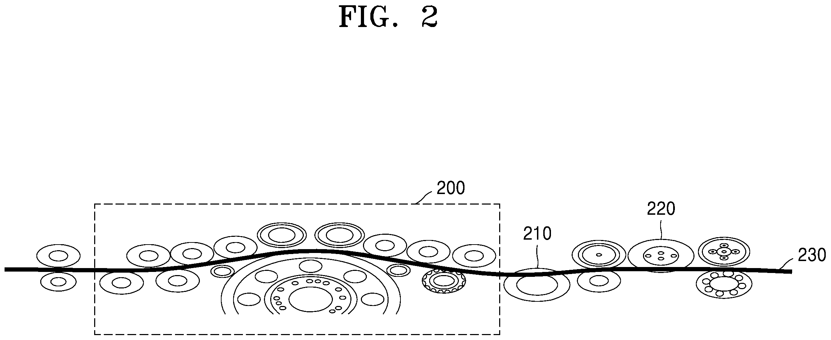

FIG. 2 is a view illustrating an example of a detailed configuration of a steel bar straightener used in an embodiment of the present disclosure.

Referring to FIG. 2, the steel bar straightener includes a large pressure roll 200 that is configured of a plurality of rollers and applies a large pressure to a steel bar 230, and fine correction rolls 210 and 220 capable of finely correcting the bending of the steel bar, or the like.

In some embodiments, in the steel bar straightener, the large pressure rolls 200 and the fine correction rolls 210 and 220 may be present in pairs so that two steel bars may be straightened simultaneously. The fine correction roll may be configured of a left-right correction roll 210 moving left and right, and a vertical correction roll 220 moving up and down. It is possible to control the bending of the steel bar discharged through the outlet 108 according to the left-right movement of the left-right correction roll 210 or the vertical movement of the vertical correction roll 220.

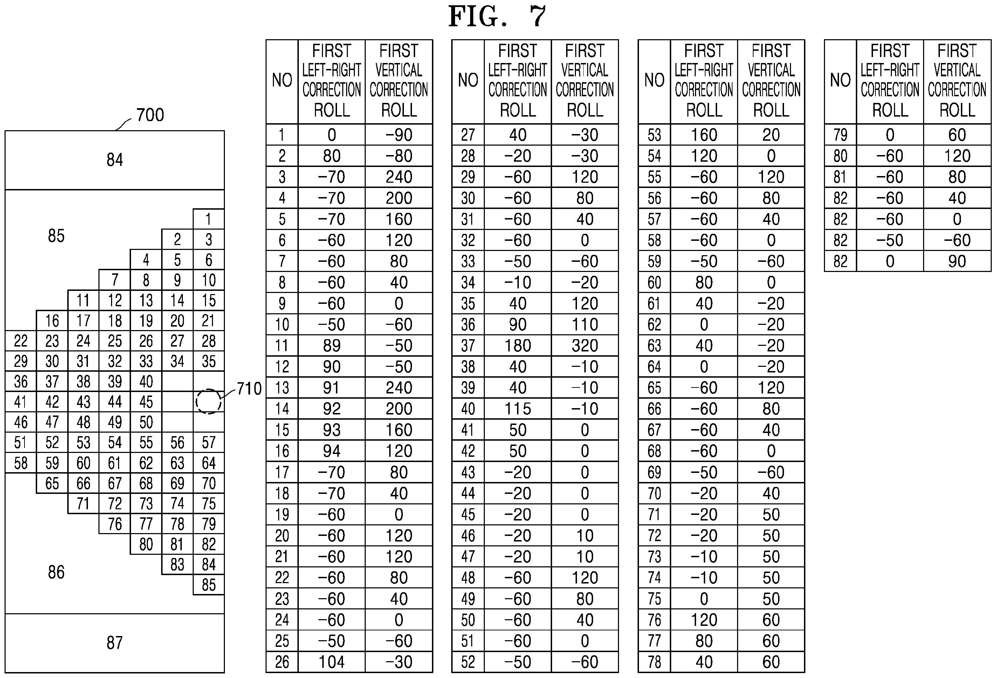

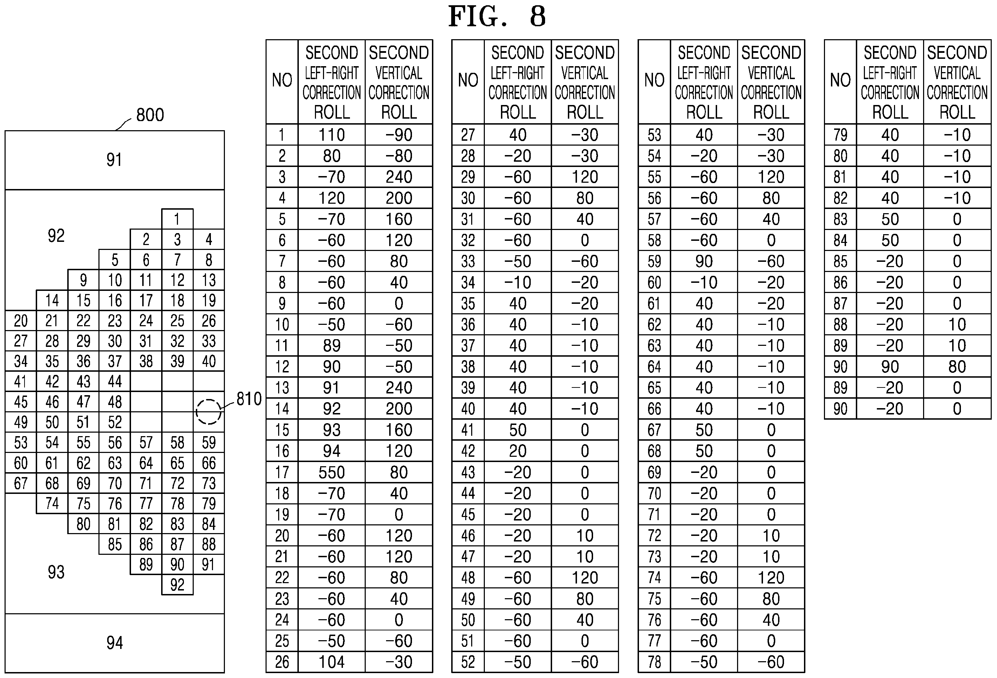

An influence of the movement of the left-right correction roll 210 and the vertical correction roll 220 on the steel bar 230 output through the outlet 108 may be grasped in advance through an experimental or empirical analysis. Therefore, in the following embodiments, control values to be input to the left-right correction roll 210 and the vertical correction roll 220 according to a degree of bending of the steel bar 230 output through the outlet 108 are assumed to be set in advance as illustrated in FIGS. 7 and 8.

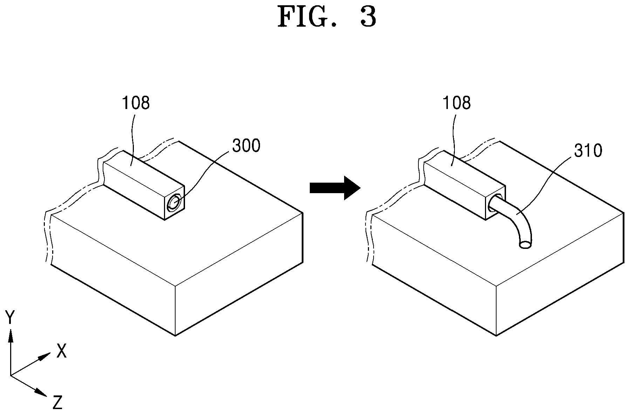

FIG. 3 is a view illustrating an example in which a steel bar straightener according to an embodiment of the present disclosure outputs one steel bar.

Referring to FIG. 3, steel bars 300 and 310 may be bent when being output for a certain length from the outlet 108 of the steel bar straightener. If bending of the steel bar 310 occurs, it is necessary to control the large pressure roll 104 or the fine correction roll 106 in the steel bar straightener 100. For example, it is possible to correct the bending of the steel bar through the movement of the left-right correction roll or the vertical correction roll of the fine correction roll 106.

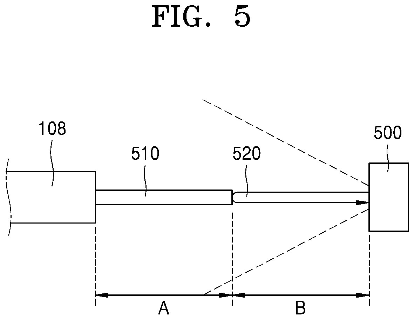

The control apparatus 110 obtains an X-Y plane image by using the image capturing apparatus 120 located at a position spaced apart from the steel bar straightener 100 by a certain distance in a Z-axis direction in order to grasp the bending of the steel bar. An example of an image capturing method for grasping the end point of the steel bar is illustrated in FIG. 5.

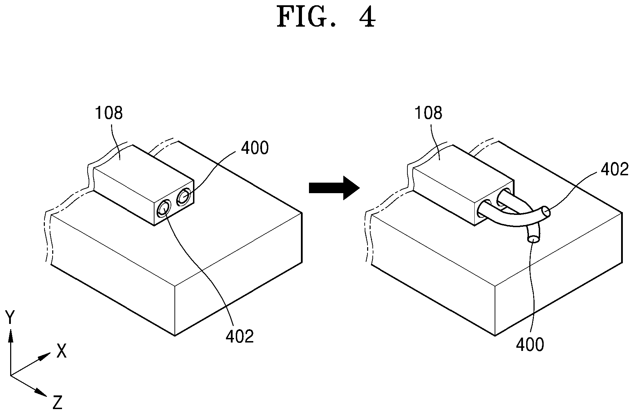

FIG. 4 is a view illustrating an example in which a steel bar straightener according to an embodiment of the present disclosure simultaneously outputs two steel bars.

Referring to FIG. 4, two steel bars 400 and 402 are output simultaneously from the outlet 108 of the steel bar straightener. Bending patterns of the two steel bars 400 and 402 may be different. Therefore, the control apparatus 110 needs to control the steel bar straightener by generating respective control values for the two steel bars 400 and 402.

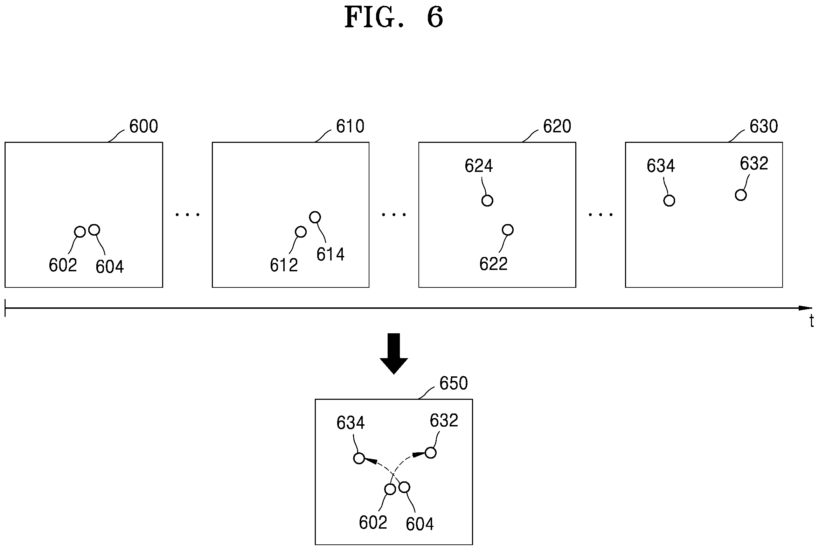

The two steel bars 400 and 402 output simultaneously may be twisted and bent in different directions. In this case, it may be difficult to grasp which steel bar is output from which position of the outlet 108 if only the positions of the end points of the two steel bars, which are output for a certain length, are grasped. As in the present embodiment, the positions of the end points of the two steel bars 400 and 402 at the starting position of the outlet 108 and the positions thereof after output for a certain length are changed. Therefore, the steel bar straightener may not be controlled by simply grasping only the end points of the two steel bars which are output for a certain length. A method of mapping the end point of the steel bar output for a certain length and the starting position of the outlet of the steel bar will be described with reference to FIG. 6.

FIG. 5 is a view illustrating an example of an image capturing method according to an embodiment of the present disclosure.

Referring to FIG. 5, an image capturing apparatus 500 includes an infrared generator, an infrared detection sensor, and an infrared camera. The infrared ray generator emits an infrared ray 520 in an imaging direction, and the infrared detection sensor is a kind of a Time of Flight (ToF) sensor and measures a time until the infrared ray hits the steel bar 510 and returns after the infrared ray is emitted to grasp a distance between the image capturing apparatus 500 and an object. The infrared camera captures the infrared image.

For example, in order to, by the image capturing apparatus 500, capture an image of the steel bar 510 output from the outlet 108 to a certain length A, a position that is a certain distance B away from the image capturing apparatus 500 may be set as an imaging position. The image capturing apparatus 500 grasps whether the steel bar 510 arrives at the imaging position (that is, when the steel bar is located at the distance B from the image capturing apparatus) through the infrared detection sensor, and uses the infrared camera when the steel bar 510 arrives at the imaging position to image the end point of the steel bar. The image capturing apparatus 500 emits an infrared ray 520 and captures an image by using the infrared ray 520 that hits the steel bar 510 and returns. Accordingly, since the end point of the steel bar is displayed brighter than a background region in the infrared image, the control apparatus 110 may easily identify the end point of the steel bar. In addition, the image capturing apparatus 500 may capture an image of the starting position where the steel bar is output from the outlet 108 to obtain the image.

In some embodiments, in front of the outlet 108 of the steel bar straightener, there may be the steel bar guide 109 that guides the direction of the steel bar. The steel bar guide 109 guides the advancing direction of the steel bar only when the steel bar is output for a certain length from the outlet 109, and the steel bar guide may not guide the advancing direction of the steel bar away from the steel bar when the steel bar is output for a certain length or more. In order to accurately grasp the degree of bending of the steel bar, it is preferable that the steel bar guide does not guide the advancing direction of the steel bar.

Therefore, if the steel bar guide 109 is separated from the steel bar 510 before the steel bar 510 output from the outlet 108 arrives at the image capturing position (distance A), there may be a case where the end point of the steel bar is shaken at the image capturing position. If the end point of the steel bar is shaken, it is difficult to grasp the exact location of the end point of the steel bar. As an example for solving this problem, the image capturing apparatus 500 captures infrared images of several tens of frames per second when the steel bar arrives at the imaging position (that is, the distance B from the image capturing apparatus), and the control apparatus 110 may grasp the position of the end point of the steel bar by averaging the positions of the end points of the steel bars grasped in the plurality of frames.

If the number of steel bars output from the outlet 108 is one as illustrated in FIG. 3, the control apparatus 110 grasps the end point of one steel bar, and if the number of steel bars output from the outlet is two as illustrated in FIG. 4, the control apparatus 110 grasps the end points of the two steel bars.

In a case of grasping the end points of the two steel bars in the images captured by the image capturing apparatus, it is necessary to grasp where each end point is output from the outlet so that the control value for the steel bar may be correctly input to the steel bar straightener.

FIG. 6 is a diagram illustrating an example of a captured image of an end point of a steel bar output from a steel bar straightener according to an embodiment of the present disclosure.

Referring to FIG. 6, the image capturing apparatus captures the image of the end point of the steel bar until the steel bar is output for a certain length from the starting position of the outlet. The image capturing apparatus may capture an image by using the infrared camera as illustrated in FIG. 5 or may capture an image by using a general camera utilizing visible light. The image capturing apparatus may capture the images of several tens of frames per second.

The control apparatus sequentially analyzes the images of several tens of frames imaged by the image capturing apparatus to grasp a movement trajectory of the end point of the steel bar output from the outlet 108. For example, in this embodiment, a case is illustrated in which a steel bar 602 located on the left from the starting position of the outlet 108 is output and bent right upwards (602-612-622-632), and a steel bar 604 located on the right from the starting position of the outlet 108 is output and bent left upwards (604-614-624-634).

In a case where the steel bars are twisted and output as in the example of FIG. 4, it is possible to know which steel bar is output from which position of the outlet through the movement trajectories of the two end point of the steel bars in the images of several tens of frames imaged by the image capturing apparatus.

If the movement trajectory of any one of the two steel bars is grasped, the movement trajectory of the other steel bar is naturally grasped. Therefore, in some embodiments, the control apparatus 110 may grasp only the movement trajectory of one of the two steel bars.

In one embodiment, the control apparatus 110 may apply simultaneously the two methods of FIGS. 5 and 6. For example, as illustrated in FIG. 6, the image capturing apparatus 500 uses the infrared camera or the general camera to capture a plurality of images at predetermine time intervals until the steel bar is output for a certain length from the starting position of the outlet 108. In addition, as illustrated in FIG. 5, the image capturing apparatus 500 captures the infrared image when the steel bar is output for a certain length and arrives at the imaging position. The control apparatus 110 grasps the movement trajectory of at least one end point of the steel bar through the image captured by the method of FIG. 6, and grasps the end point of the steel bar outputting for a certain length grasped by the method of FIG. 5 is at which starting position of the outlet by using the movement trajectory.

In another embodiment, the control apparatus 110 may use deep learning to better distinguish between the end point of the steel bar and the background when analyzing a plurality of frame images to grasp the movement trajectory of the end point of the steel bar. For example, the control apparatus 110 accurately identifies the end point of the steel bar in the image acquired through the image capturing apparatus 500 after deep learning by using a plurality of sample images for the end point of the steel bar and a plurality of sample images for the background. For example, a Haar like feature or Haar Training may be applied to the deep learning.

FIGS. 7 and 8 are diagrams illustrating examples of control maps according to the present disclosure.

FIGS. 7 and 8 illustrate the control maps representing control values for a pair of fine correction rolls in a case where the steel bar straightener straightens simultaneously two steel bars. For example, in a case where the steel bar straightener is configured of a pair of a first inside fine correction rolls (that is, a first left-right correction roll and a first vertical correction roll) and a second outside fine correction rolls (that is, a second left-right correction roll and a second vertical correction roll), FIG. 7 may be a control map 700 for controlling the first inside fine correction rolls, and FIG. 8 may be a control map 800 for controlling the second outside fine correction rolls.

Referring to FIGS. 7 and 8, the control maps 700 and 800 are configured of a plurality of regions for grasping the degree of bending of the steel bar. In addition, each region of the control maps 700 and 800 is mapped with control values of the fine correction rolls (left-right correction roll and vertical correction roll). The control value of the fine correction roll is preset according to characteristics of the straightener.

The control maps 700 and 800 respectively include original points 710 and 810 for matching the end point of the first steel bar at the output starting position of the outlet 108. If the steel bar is bent while being output from the outlet 108, the end point of the second steel bar according to the degree of bending is relatively far from the end point of the first steel bar.

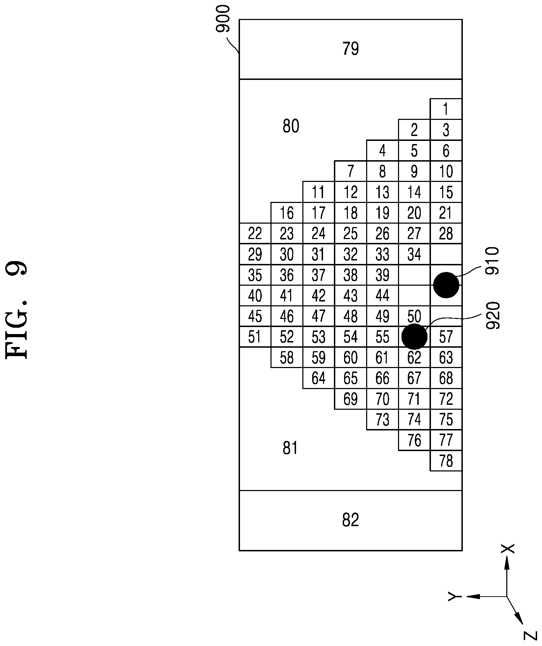

FIG. 9 is a diagram illustrating an example in which a control map and an end point of a steel bar are matched according to an embodiment of the present disclosure.

Referring to FIG. 9, the control apparatus matches an end point 910 of the first steel bar at the output starting position of the outlet 108 of the steel bar straightener with an original point of a control map 900. In addition, the control apparatus grasps which region of the control map 900 matches an end point of the second steel bar 920 when the steel bar is output for a preset length from the outlet 108.

In the present embodiment, if the control map 900 is equal to the control map 700 of FIG. 7, the region of the control map 900, with which the end point 920 of the second steel bar is matched, is a region of the number 56. Referring to FIG. 7, control values of the first left-right correction roll and the first vertical correction roll that match the region of the number 56 are 40 and 30, respectively. The control apparatus controls the steel bar straightener by using the corresponding control values.

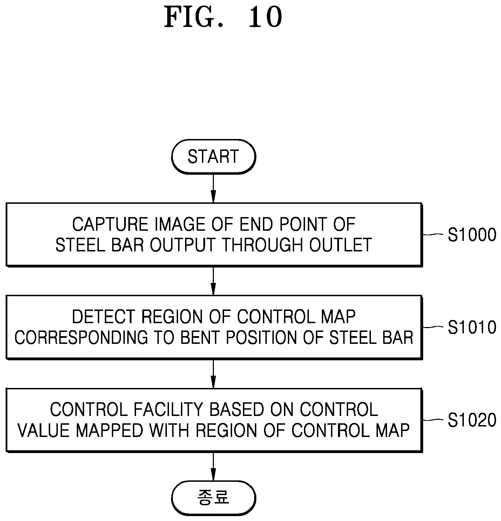

FIG. 10 is a flowchart illustrating an example of a method of controlling the steel bar straightener according to the present disclosure.

Referring to FIG. 10, the control apparatus 110 captures the image of the steel bar output through the outlet 108 of the steel bar straightener (S1000). When the steel bar output through the outlet passes through at least two preset locations, the control apparatus 110 captures the image of the end point of the steel bar. For example, the control apparatus 110 controls the image capturing apparatus 120 to capture the images at the starting position when the steel bar is output from the outlet 108 and at a position where the steel bar is output for a certain length (for example, 800 mm) from the outlet 108.

In one embodiment, the control apparatus 110 may grasp the end point of the steel bar by capturing an infrared image by using the image capturing apparatus 500 illustrated in FIG. 5 when the steel bar is output for a certain length from the outlet. When the end point of the steel bar is imaged, if there is shaking of the steel bar, the control apparatus 110 may grasp the end point of the steel bar by averaging the positions of the end points of the steel bars grasped in the images of several tens of frames.

In another embodiment, the control apparatus 110 may grasp the movement trajectory of the end point of the steel bar by capturing images at predetermine time intervals (for example, several tens of frames per second) by the method illustrated in FIG. 6 until the steel bar is output for a certain length from the starting position of the outlet 108. In particular, when two or more steel bars are simultaneously output from the outlet 108, it may grasp, through the movement trajectory, which steel bar is output from which position of the outlet 108. Therefore, the control values according to the bending of each steel bar are respectively generated, and the steel bar straightener is controlled.

In another embodiment, by applying simultaneously the methods of FIGS. 5 and 6, the position of the end point of the steel bar may be grasped when the steel bar is output for a certain length along with the movement trajectory of the steel bar. In a case where two or more steel bars are output simultaneously from the outlet 108, the control apparatus 110 may grasp that the end point of the steel bar grasped by the method of FIG. 6 is output from which starting position of the outlet, through the movement trajectory grasped by the method of FIG. 5.

The control apparatus 110 respectively grasps the positions of the end points of the steel bars from at least two captured images, and then matches the end point of the steel bar with the original point of the control map to correspond thereto (S1010). For example, the control apparatus 110 aligns the end point of the steel bar of the first captured image (that is, the image when the steel bar is at the starting position of the outlet 108) with the original point of the control map, and then grasps whether the position of the end point of the steel bar of the captured image (that is, the image at the location where the steel bar is output for a certain length) corresponds to which region of the control map.

The control apparatus 110 controls the steel bar straightener by using the control value set in the region of the control map corresponding to the second imaged end point of the steel bar (S1020).

FIG. 11 is a diagram illustrating a configuration of an embodiment of a control apparatus according to the present disclosure.

Referring to FIG. 11, the control apparatus 110 of the steel bar straightener includes an imaging unit 1100, a region grasping unit 1110, and a control unit 1120.

The imaging unit 1100 images, through the image capturing apparatus 120, the steel bar output through the outlet 108 of the steel bar straightener 100. The imaging unit 1100 may image the steel bar whenever the steel bar output through the outlet 108 of the steel bar straightener 100 passes through at least two or more preset positions. For example, referring to FIG. 5, the imaging unit 1100 may respectively capture the first image and the second image at time points when the steel bar 510 is output from the outlet 108 and when the steel bar 510 is output for a certain length (for example, 800 mm) from the outlet 108.

The imaging unit 1100 may receive a trigger signal for capturing the image from the steel bar straightener 100 at two predetermine positions. When the steel bar straightener 100 detects that the steel bar arrives at the end of the outlet 108 through a sensor located at the end of the outlet 108, the trigger signal may be generated and transmitted to the imaging unit 1100. Alternatively, the steel bar straightener 100 detects the rotation of the roller at either of the large pressure roll 104 or the fine correction roll 106, so that it is possible to detect how much of the steel bar located at the end of the outlet 108 is output out of the outlet 108, and when the steel bar is output for a preset length, the trigger signal may be generated and transmitted to the imaging unit 1100.

In another embodiment, the imaging unit 1100 may capture the image by detecting that the steel bar is output for a certain length from the outlet by using the infrared sensor with the method illustrated in FIG. 5.

In another embodiment, the imaging unit 1100 may include a first imaging unit 1102 that captures an image by using visible light and a second imaging unit 1104 that captures infrared image. The first imaging unit 1102 may capture the image by using the method of FIG. 5, and the second imaging unit 1104 may capture the image by using the method of FIG. 6. In some embodiments, the imaging unit 1100 may include only one of the first imaging unit and the second imaging unit. In another embodiment, the imaging unit 1100 may grasp the image of the end point of the steel bar and the movement trajectory thereof by using only the second imaging unit 1104 with the method of FIGS. 5 and 6. Various conventional image analysis methods may be applied to grasp the end point of steel bar in the captured image.

The region grasping unit 1110 grasps the movement (that is, bending) of the end points of the steel bars by causing each end point of the steel bar grasped in at least two images captured by the imaging unit 1100 to correspond to the control map configured of a plurality of regions. An example of the control map is illustrated in FIGS. 7 and 8.

For example, the imaging unit 1100 captures the first image at the time point when the steel bar is output through the outlet 108 and the second image at the time point when the steel bar is output for a certain length (for example, 800 mm) from the outlet 108. The region grasping unit 1110 matches the end points of the steel bars grasped in the first image with the original points 710 and 810 of the control maps 700 and 800 including a plurality of regions as illustrated in FIG. 6 or 7, and grasps which region of the control map 700 or 800 matches with a relative position of the end point of the steel bar grasped in the second image. An example of the method of matching the control map with the end point of the steel bar is also illustrated in FIG. 9.

The control unit 1120 grasps the region indicated by the end point of the steel bar of the second image in the control map, and controls the steel bar straightener 100 by using a preset control value mapped to the region. The control maps 700 and 800 are divided into the plurality of regions as illustrated in FIG. 7 or 8, and the preset control value is mapped in each region. Therefore, as illustrated in FIG. 9, after matching the end point 910 of the steel bar of the first image with the original point 710 of the control map 700, if the end point 920 of the steel bar of the second image corresponds to the region of the number 56 of the control map 700, the control unit 1120 controls the left-right correction roll, the vertical correction roll, or the like by using a preset control value in the region of the number 56 of the control map 700.

The present disclosure may also be implemented as a computer-readable code on a computer-readable recording medium. The computer-readable recording medium includes all types of recording devices that store data that may be read by a computer system. An example of computer-readable recording media includes a ROM, a RAM, a CD-ROM, a magnetic tape, a floppy disk, an optical data storage device, or the like. In addition, the computer-readable recording medium may be distributed over computer systems connected through a network to store and execute the computer-readable code in a distributed manner.

## Claims

1. A method of controlling a steel bar straightener (100), the method comprising:
acquiring an image that is obtained by imaging an end point of a steel bar when the steel bar output through an outlet (108) of the steel bar straightener arrives at a preset position;
determining a region of a control map (700; 800; 900) that matches with an end point of the steel bar of an image when matching the image with the control map configured of a plurality of regions; and
controlling the steel bar straightener (100) based on a preset control value mapped in a region of the control map (700; 800; 900).

2. The method of claim 1, wherein the acquiring of the image includes:
determining whether the steel bar arrives at the preset position by using a time until emitted infrared rays (520) are reflected from an object and returned; and
acquiring an image obtained by imaging the end point of the steel bar with an infrared camera when the steel bar arrives at the preset position.

3. The method of claim 1,
wherein the acquiring of the image includes imaging the steel bar arriving at the preset position with an imaging camera of several tens of frames per second to acquire a plurality of frame images, and
wherein the controlling includes determining a value obtained by averaging the positions of the end points of the steel bars grasped in the plurality of frame images as the position of the end point of the steel bar.

4. The method of claim 1,
wherein the acquiring of the image includes acquiring an image obtained by imaging two end points of the steel bars output simultaneously through the outlet of the steel bar straightener (100), and
wherein the determining of the region of the control map (700; 800; 900) includes determining each region of the control map (700; 800; 900) that matches with the end point of each steel bar.

5. The method of claim 4, wherein the acquiring of the image includes:
acquiring a plurality of images obtained by imaging end points of two steel bars output from the outlet at predetermined time intervals;
grasping a movement trajectory of the end point of at least one steel bar by using the plurality of images; and
mapping between the end point of each steel bar arriving at the preset position and a starting position at which each steel bar comes out of the outlet by using the movement trajectory.

6. The method of claim 5, wherein the determining of the movement trajectory includes
performing deep learning by using a plurality of sample images for the end point of the steel bar and a plurality of sample images for a background, and then identifying the end point of the steel bar in the plurality of images; and
tracking the identified end point of the steel bar to determine the movement trajectory.

7. A control apparatus (110) for a steel bar straightener (100), the apparatus comprising:
an imaging unit (1100) that acquires an image obtained by imaging a steel bar output through an outlet of the steel bar straightener;
a region determining unit that determines a region of a control map (700; 800; 900) that matches with an end point of the steel bar of an image when matching the image with the control map configured of a plurality of regions; and
a control unit that controls the steel bar straightener based on a preset control value mapped in a region of the control map (700; 800; 900).

8. The control apparatus (110) for a steel bar straightener (100) of claim 7, wherein the imaging unit (1100) includes
a first imaging unit (1102) that performs imaging by using visible light; and
a second imaging unit (1104) that performs imaging by using infrared rays,
wherein the first imaging unit (1102) performs imaging at predetermine time intervals from when the steel bar is discharged from the outlet, and
wherein the second imaging unit (1104) performs imaging when the steel bar arrives at a preset position.

9. The control apparatus (110) for a steel bar straightener of claim 8, wherein the second imaging unit (1104) uses a time until the emitted infrared rays (520) are reflected to an object and returned to determine whether the steel bar arrives at a preset position.

10. The control apparatus (110) for a steel bar straightener (100) of claim 8, wherein the control unit
determines a movement trajectory of the steel bar from the image captured by the first imaging unit, and
maps the end point of the steel bar grasped in the image captured by the second imaging unit (1104) with a starting position at which the steel bar comes out of the outlet based on the movement trajectory.

11. The control apparatus (110) for a steel bar straightener (100) of claim 7,
wherein the imaging unit (1100) images two steel bars that are output simultaneously through the outlet (108), and
wherein the control unit controls the steel bar straightener (100) by calculating control values of two steel bars according to a spaced distance and a direction between the end points of the two steel bars and a starting position of each steel bar at the outlet (108).

12. A computer-readable recording medium on which a program for executing the method according to claim 1 is recorded.

## Patentansprüche

1. Verfahren zum Steuern einer Stahlstangenrichtmaschine (100), wobei das Verfahren Folgendes umfasst:
Erfassen eines Bildes, das durch Abbilden eines Endpunkts einer Stahlstange erlangt wird, wenn die Stahlstange, die durch einen Auslass (108) der Stahlstangenrichtmaschine ausgegeben wird, an einer voreingestellten Position ankommt;
Bestimmen eines Bereichs einer Steuerkarte (700; 800; 900), die mit einem Endpunkt der Stahlstange eines Bildes übereinstimmt, wenn das Bild mit der Steuerkarte übereinstimmt, die aus einer Vielzahl von Bereichen konfiguriert ist; und
Steuern der Stahlstangenrichtmaschine (100) basierend auf einem voreingestellten Steuerwert, der in einem Bereich der Steuerkarte (700; 800; 900) kartiert ist.

2. Verfahren nach Anspruch 1, wobei das Erfassen des Bildes Folgendes beinhaltet:
Bestimmen, ob die Stahlstange an der voreingestellten Position ankommt, unter Verwendung einer Zeit, bis emittierte Infrarotstrahlen (520) von einem Objekt reflektiert und zurückgegeben werden; und
Erfassen eines Bildes, das durch das Abbilden des Endpunkts der Stahlstange mit einer Infrarotkamera erlangt wird, wenn die Stahlstange an der voreingestellten Position ankommt.

3. Verfahren nach Anspruch 1,
wobei das Erfassen des Bildes das Abbilden der Stahlstange, die an der voreingestellten Position ankommt, mit einer Abbildungskamera von mehreren Dutzend Einzelbildern pro Sekunde beinhaltet, um eine Vielzahl von Einzelbildern zu erfassen, und
wobei das Steuern das Bestimmen eines Wertes beinhaltet, der durch Mittelwertbilden der Positionen der Endpunkte der Stahlstangen, die in der Vielzahl von Einzelbildbildern als die Position des Endpunktes der Stahlstange begriffen werden, erhalten wird.

4. Verfahren nach Anspruch 1,
wobei das Erfassen des Bildes das Erfassen eines Bildes beinhaltet, das durch das Abbilden zweier Endpunkte der Stahlstangen, die gleichzeitig durch den Auslass des Stahlstangen-Richters (100) ausgegeben werden, erlangt wird, und
wobei das Bestimmen des Bereichs der Steuerkarte (700; 800; 900) das Bestimmen jedes Bereichs der Steuerkarte (700; 800; 900) beinhaltet, der mit dem Endpunkt jeder Stahlstange übereinstimmt.

5. Verfahren nach Anspruch 4, wobei das Erfassen des Bildes Folgendes beinhaltet:
Erfassen einer Vielzahl von Bildern, die durch das Abbilden der Endpunkte von zwei Stahlstangen, die aus dem Auslass ausgegeben werden, in vorbestimmten Zeitintervallen erlangt werden;
Begreifen eines Bewegungsverlaufs des Endpunkts von mindestens einer Stahlstange unter Verwendung einer Vielzahl von Bildern; und
Kartieren zwischen dem Endpunkt jeder Stahlstange, die an der voreingestellten Position ankommt, und einer Startposition, an der jede Stahlstange unter Verwendung des Bewegungsverlaufs aus dem Auslass kommt.

6. Verfahren nach Anspruch 5, wobei das Bestimmen des Bewegungsverlaufs
Durchführen von Deep-Learning unter Verwendung einer Vielzahl von Musterbildern für den Endpunkt der Stahlstange und einer Vielzahl von Musterbildern für einen Hintergrund und dann Identifizieren des Endpunkts der Stahlstange in der Vielzahl von Bildern beinhaltet; und
Verfolgen des identifizierten Endpunkts der Stahlstange, um den Bewegungsverlauf zu bestimmen.

7. Steuervorrichtung (110) für eine Stahlstangenrichtmaschine (100), wobei die Vorrichtung Folgendes umfasst:
eine Abbildungseinheit (1100), die ein Bild erfasst, das durch das Abbilden einer Stahlstange erlangt wird, die durch einen Auslass der Stahlstangenrichtmaschine ausgegeben wird;
eine Bereichsbestimmungseinheit, die einen Bereich einer Steuerkarte (700; 800; 900) bestimmt, die mit einem Endpunkt der Stahlstange eines Bildes übereinstimmt, wenn das Bild mit der Steuerkarte übereinstimmt, die aus einer Vielzahl von Bereichen konfiguriert ist; und
eine Steuereinheit, die die Stahlstangenrichtmaschine basierend auf einem voreingestellten Steuerwert, der in einem Bereich der Steuerkarte (700; 800; 900) kartiert ist, steuert.

8. Steuervorrichtung (110) für eine Stahlstangenrichtmaschine (100) nach Anspruch 7, wobei die Abbildungseinheit (1100) eine erste Abbildungseinheit (1102), die das Abbilden unter Verwendung von sichtbarem Licht durchführt; und
eine zweite Abbildungseinheit (1104), die das Abbilden unter Verwendung von Infrarotstrahlen durchführt, beinhaltet,
wobei die erste Abbildungseinheit (1102) das Abbilden in vorbestimmten Zeitintervallen ab dem Zeitpunkt, zu dem die Stahlstange aus dem Auslass abgegeben wird, durchführt, und
wobei die zweite Abbildungseinheit (1104) das Abbilden durchführt, wenn die Stahlstange an einer voreingestellten Position ankommt.

9. Steuervorrichtung (110) für eine Stahlstangenrichtmaschine nach Anspruch 8, wobei die zweite Abbildungseinheit (1104) eine Zeit verwendet, bis die emittierten Infrarotstrahlen (520) zu einem Objekt reflektiert und zurückgegeben werden, um zu bestimmen, ob die Stahlstange an einer voreingestellten Position ankommt.

10. Steuervorrichtung (110) für eine Stahlstangenrichtmaschine (100) nach Anspruch 8, wobei die Steuereinheit
einen Bewegungsverlauf der Stahlstange aus dem Bild, das durch die erste Abbildungseinheit aufgenommen wurde, bestimmt und
den Endpunkt der Stahlstange, der in dem Bild begriffen wird, das durch die zweite Abbildungseinheit (1104) aufgenommen wird, mit einer Startposition, an der die Stahlstange aus dem Auslass herauskommt, basierend auf dem Bewegungsverlauf kartiert.

11. Steuervorrichtung (110) für eine Stahlstangenrichtmaschine (100) nach Anspruch 7,
wobei die Abbildungseinheit (1100) zwei Stahlstangen abbildet, die gleichzeitig durch den Auslass (108) ausgegeben werden, und
wobei die Steuereinheit die Stahlstangenrichtmaschine (100) durch Berechnen von Steuerwerten von zwei Stahlstangen gemäß einer Entfernung und einer Richtung zwischen den Endpunkten der zwei Stahlstangen und einer Startposition jeder Stahlstange an dem Auslass (108) steuert.

12. Computerlesbares Aufzeichnungsmedium, auf dem ein Programm zum Ausführen des Verfahrens nach Anspruch 1 aufgezeichnet ist.

## Revendications

1. Procédé de commande d'un redresseur de barre d'acier (100), le procédé comprenant :
l'acquisition d'une image qui est obtenue en imageant un point d'extrémité d'une barre d'acier lorsque la barre d'acier sortant par une sortie (108) du redresseur de barre d'acier arrive à une position prédéfinie ;
la détermination d'une région d'une carte de commande (700 ; 800 ; 900) qui correspond à un point d'extrémité de la barre d'acier d'une image lors de la mise en correspondance de l'image avec la carte de commande constituée d'une pluralité de régions ; et
la commande du redresseur de barre d'acier (100) sur la base d'une valeur de commande prédéfinie mappée dans une région de la carte de commande (700 ; 800 ; 900).

2. Procédé selon la revendication 1, dans lequel l'acquisition de l'image comporte :
le fait de déterminer si la barre d'acier arrive à la position prédéfinie à l'aide d'un temps jusqu'à ce que des rayons infrarouges émis (520) soient réfléchis à partir d'un objet et renvoyés ; et
l'acquisition d'une image obtenue en imageant le point d'extrémité de la barre d'acier avec une caméra infrarouge lorsque la barre d'acier arrive à la position prédéfinie.

3. Procédé selon la revendication 1,
dans lequel l'acquisition de l'image comporte l'imagerie de la barre d'acier arrivant à la position prédéfinie avec une caméra d'imagerie de plusieurs dizaines de trames par seconde pour acquérir une pluralité d'images de trame, et
dans lequel la commande comporte la détermination d'une valeur obtenue en faisant la moyenne des positions des points d'extrémité des barres d'acier saisies dans la pluralité d'images de trame comme position du point d'extrémité de la barre d'acier.

4. Procédé selon la revendication 1,
dans lequel l'acquisition de l'image comporte l'acquisition d'une image obtenue en imageant deux points d'extrémité des barres d'acier sortant simultanément par la sortie du redresseur de barre d'acier (100), et
dans lequel la détermination de la région de la carte de commande (700 ; 800 ; 900) comporte la détermination de chaque région de la carte de commande (700 ; 800 ; 900) qui correspond au point d'extrémité de chaque barre d'acier.

5. Procédé selon la revendication 4, dans lequel l'acquisition de l'image comporte :
l'acquisition d'une pluralité d'images obtenues en imageant des points d'extrémité de deux barres d'acier sortant à partir de la sortie à des intervalles de temps prédéterminés ;
la saisie d'une trajectoire de mouvement du point d'extrémité d'au moins une barre d'acier à l'aide de la pluralité d'images ; et
le mappage entre le point d'extrémité de chaque barre d'acier arrivant à la position prédéfinie et une position de départ à laquelle chaque barre d'acier sort de la sortie à l'aide de la trajectoire de mouvement.

6. Procédé selon la revendication 5, dans lequel la détermination de la trajectoire de mouvement comporte
l'exécution d'un apprentissage profond à l'aide d'une pluralité d'images d'échantillon pour le point d'extrémité de la barre d'acier et d'une pluralité d'images d'échantillon pour un arrière-plan, puis l'identification du point d'extrémité de la barre d'acier dans la pluralité d'images ; et
le suivi du point d'extrémité identifié de la barre d'acier pour déterminer la trajectoire de mouvement.

7. Appareil de commande (110) pour un redresseur de barre d'acier (100), l'appareil comprenant :
une unité d'imagerie (1100) qui acquiert une image obtenue en imageant une barre d'acier sortant par une sortie du redresseur de barre d'acier ;
une unité de détermination de région qui détermine une région d'une carte de commande (700 ; 800 ; 900) qui correspond à un point d'extrémité de la barre d'acier d'une image lors de la mise en correspondance de l'image avec la carte de commande constituée d'une pluralité de régions ; et
une unité de commande qui commande le redresseur de barre d'acier sur la base d'une valeur de commande prédéfinie mappée dans une région de la carte de commande (700 ; 800 ; 900).

8. Appareil de commande (110) pour un redresseur de barre d'acier (100) selon la revendication 7, dans lequel l'unité d'imagerie (1100) comporte
une première unité d'imagerie (1102) qui exécute une imagerie à l'aide de la lumière visible ; et
une seconde unité d'imagerie (1104) qui exécute une imagerie à l'aide de rayons infrarouges,
dans lequel la première unité d'imagerie (1102) exécute une imagerie à des intervalles de temps prédéterminés à partir du moment où la barre d'acier est déchargée de la sortie, et
dans lequel la seconde unité d'imagerie (1104) exécute une imagerie lorsque la barre d'acier arrive à une position prédéfinie.

9. Appareil de commande (110) pour un redresseur de barre d'acier selon la revendication 8, dans lequel la seconde unité d'imagerie (1104) utilise un temps jusqu'à ce que les rayons infrarouges émis (520) soient réfléchis vers un objet et renvoyés pour déterminer si la barre d'acier arrive à une position prédéfinie.

10. Appareil de commande (110) pour un redresseur de barre d'acier (100) selon la revendication 8, dans lequel l'unité de commande
détermine une trajectoire de mouvement de la barre d'acier à partir de l'image capturée par la première unité d'imagerie, et
mappe le point d'extrémité de la barre d'acier saisie dans l'image capturée par la seconde unité d'imagerie (1104) avec une position de départ à laquelle la barre d'acier sort de la sortie sur la base de la trajectoire de mouvement.

11. Appareil de commande (110) pour un redresseur de barre d'acier (100) selon la revendication 7,
dans lequel l'unité d'imagerie (1100) image deux barres d'acier qui sont sorties simultanément par la sortie (108), et dans lequel l'unité de commande commande le redresseur de barre d'acier (100) en calculant des valeurs de commande de deux barres d'acier en fonction d'une distance espacée et d'une direction entre les points d'extrémité des deux barres d'acier et une position de départ de chaque barre d'acier à la sortie (108).

12. Support d'enregistrement lisible par ordinateur sur lequel est enregistré un programme permettant d'exécuter le procédé selon la revendication 1.
